# EUROPÄISCHE PATENTSCHRIFT

(11) **EP 2 678 196 B1**
(45) Veröffentlichungstag und Bekanntmachung des Hinweises auf die Patenterteilung: **29.11.2017**
(21) Anmeldenummer: 12705833.7
(22) Anmeldetag: 16.02.2012
(51) Int. Cl.: B60S 1/38

(54) **WISCHBLATT SOWIE EIN VERFAHREN ZUM HERSTELLEN EINES WISCHBLATTS**
WIPER BLADE AND METHOD FOR PRODUCING A WIPER BLADE
BALAI D'ESSUIE-GLACE ET PROCÉDÉ DE PRODUCTION D'UN BALAI D'ESSUIE-GLACE

(30) Priorität: 24.02.2011 DE 102011004646
(43) Veröffentlichungstag der Anmeldung: 01.01.2014
(73) Patentinhaber: Robert Bosch GmbH, 70442 Stuttgart (DE)
(72) Erfinder: CRIEL, Paul, B-3800 St. Truiden (BE); BEELEN, Hans, B-3540 Herk de Stad (BE); VANDERHEYDEN, Gert, B-3150 Tildonk (BE)
(86) Internationale Anmeldenummer: PCT/EP2012/052701
(87) Internationale Veröffentlichungsnummer: WO 2012/113709

(56) Entgegenhaltungen:
- EP-A1- 1 745 997
- DE-A1- 19 917 127
- DE-A1-102009 002 411
- US-A1- 2008 078 051

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärische gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Am Tragelement ist eine Anschlussvorrichtung befestigt, über die die Verbindung zum Wischerarm hergestellt wird.

Aus der EP 0914269 B1 ist es bekannt, die Anschlussvorrichtung mittels einer Schweißverbindung am Tragelement zu befestigen. Dazu wird das entweder aus Metall oder einem Kunststoff bestehende wischblattseitige Verbindungselement auf das Tragelement aufgebracht oder aufgeschoben und mittels einer Widerstandsschweißung im Falle eines metallenen Verbindungselements oder mittels einer Ultraschallschweißung im Falle eines Kunststoff-Verbindungselements stoffschlüssig mit dem Tragelement verbunden. Diese Schweißverbindung ist im Alltag extremen Bedingungen ausgesetzt und muss hohen Drehmomenten und Vibrationen auch bei unterschiedlichen Witterungsbedingungen standhalten Insbesondere bei den in großen Stückzahlen hergestellten Wischblättern stellt eine Schweißverbindung hohe Qualitätsanforderungen an die Prozessführung und verteuert damit das Wischblatt, was gerade bei Massenprodukten zu vermeiden ist.

Dokument EP1745997 A1 offenbart ein Wischblatt mit einer Wischleiste. Die Wischleiste weist Längskanäle auf, die zur Aufnahme von Tragschienen vorgesehen sind. Ferner weist das Wischblatt ein Anschlusselement auf, das aus einem polymeren Material besteht. Das Anschlusselement weist Aufnahmemittel auf, über welche das Anschlusselement fest mit den Tragschienen verbunden ist. Bevor das Anschlusselement mit den Tragschienen verbunden wird, wird erst ein Lötmaterial auf einen Verbindungsbereich des Anschlusselements aufgebracht. Nach einer Verbindung wird das Lötmaterial durch ein Ultraschalllötverfahren geschmolzen, wodurch sich das Anschlusselement und die Tragschienen verbinden. Das Lötmaterial kann von einem polymeren Kunstharz gebildet sein.

### Vorteile der Erfindung

Das erfindungsgemäße Wischblatt mit den Merkmalen des Hauptanspruchs hat den Vorteil, dass durch die zusätzliche Masse Toleranzen zwischen dem Tragelement und der Anschlussvorrichtung vollständig ausgeglichen werden und ein fester Verbund entsteht. Weder das Tragelement noch die Anschlussvorrichtung müssen hierbei bis in einen flüssigen Zustand erwärmt werden, so dass die mechanischen Eigenschaften nicht verändert werden.

Durch die in den Unteransprüchen angegebenen Merkmale sind vorteilhafte Weiterbildungen des Wischblatts nach dem Hauptanspruch möglich. So kann die Ausdehnung der Masse im Spalt effektiv dadurch eingeschränkt werden, wenn der Spalt zumindest in Richtung der Wischleiste begrenzt ist. Die Wischleiste wird also von der Masse nicht beeinflusst.

Um dennoch ein flächenhaft des Anliegen des Tragelements an den Aufnahmen der Anschlussvorrichtung zu ermöglichen, kann vorgesehen sein, den Spalt nur über zwei Seiten des Tragelements zu erstrecken. Dies kann beispielsweise eine konvexe Oberseite bzw. die konkave Unterseite des Tragelements sowie dessen schmale Längsseite sein.

Vorteilhaft ist eine separate Öffnung zum Einbringen der Masse an der zumindest ein Aufnahme vorgesehen, die an einer oberen Seite oder einer unteren Seite eingebracht sein kann, je nachdem, ob später eine zusätzliche Abdeckkappe verwendet wird oder nicht. Es ist jedoch auch denkbar, die Öffnung an einer schmalen Längsseite vorzusehen.

Um die Masse problemlos in den Spalt einbringen zu können, ist es von Vorteil, wenn die Masse vor dem Einbringen fließfähig ist und sich erst im Spalt verfestigt. Hierzu kann die Masse als Flüssigkeit oder Gel bereitgestellt werden. Es ist jedoch auch möglich, die Masse als Pulver oder Granulat zu verarbeiten. Welche Darreichungsform zu wählen ist, hängt zum einen vom Material der Masse selbst ab und zum anderen von der Prozessumgebung. So wird man in einer feuchten Umgebung eher eine Flüssigkeit oder ein Gel verwenden. Erfindungsgemäß ist die Masse ein 2-Komponentenklebstoff und/oder ein Harz, weil diese Stoffe nach dem Vermengen der Komponenten eine definierte Zeitspanne verarbeitbar sind, vor dem Vermengen jedoch fast unbegrenzt gelagert werden können.

Verschließt die Masse die zum Einbringen vorgesehene Öffnung zumindest teilweise, kann dadurch beim späteren Betrieb des Wischblatts vermieden werden, dass sich Schmutz und Wasser verstärkt dort ansammeln. Außerdem verbesserte es die Ästhetik, für den Fall dass die Öffnungen sichtbar bleiben.

Der Verbund zwischen Tragelement und Anschlussvorrichtung kann verbessert werden, wenn das Tragelement eine Ausnehmung aufweist, durch die sich die Masse erstreckt. Bleibt dann auch ein Teil der Masse in der für das Einbringen vorgesehenen Öffnung, ergibt sich eine Verbindung, die die Anschlussvorrichtung formschlüssig auf dem Tragelement positioniert.

Mit dem erfindungsgemäßen Verfahren zum Herstellen eines Wischblatts ist es möglich, einfach und ohne exzessive Wärmezufuhr die Anschlussvorrichtung auf dem Tragelement zu sichern. Besonders effektiv gelingt dies, wenn sich die durch eine Öffnung eingebrachte Masse entlang des Spaltes verteilt. Dies kann besonders einfach erreicht werden, wenn die Masse mittels eines Kolbens oder Stempel eingepresst wird.

Fließverhalten und Verfestigung können verbessert werden, wenn die Masse vor dem Einbringen erwärmt wird und sich nach dem Einbringen abkühlt. Je nach Material der Masse, ist es auch möglich, die Masse erst im Spalt zu erwärmen und dann beispielsweise durch chemische Reaktionen zu verfestigen.

### Zeichnung

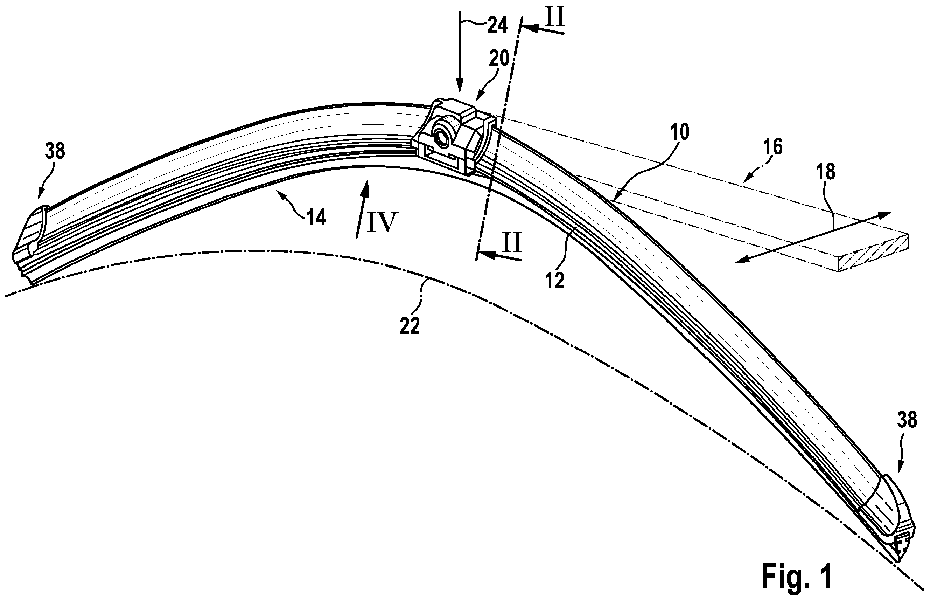

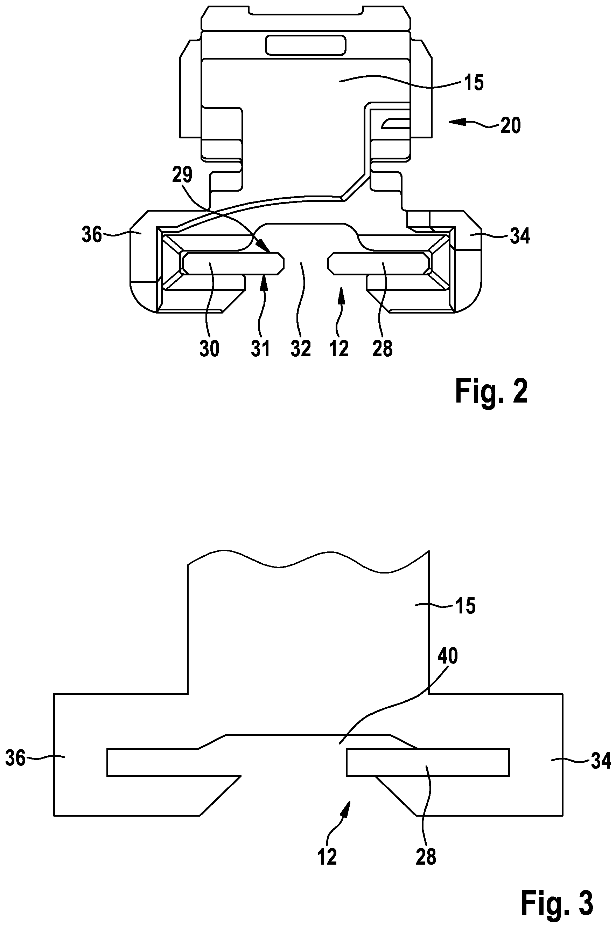

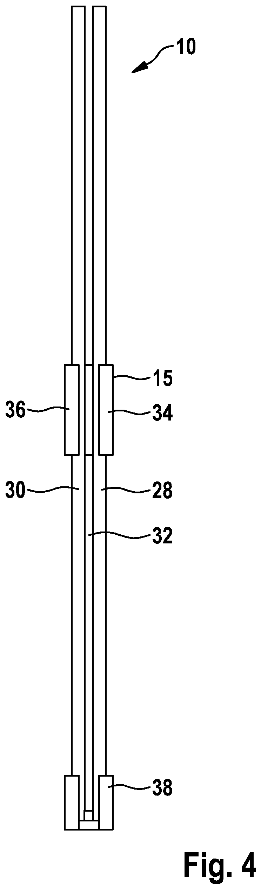

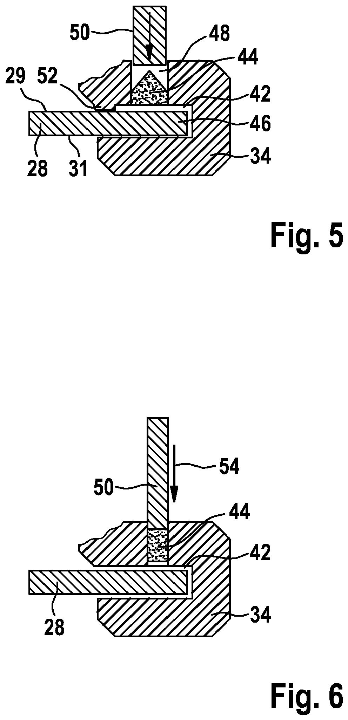

In der Zeichnung zeigen: Figur 1 ein erfindungsgemäßes Wischblatt in perspektivischer Darstellung mit strichpunktiert angedeutetem Wischerarm und strichpunktiert angedeuteter Oberfläche einer Windschutzscheibe, Fig. 2 zeigt eine Ansicht nach II-II in Fig. 1, Fig. 3 eine schematische Darstellung der Ansicht nach Fig. 2 mit nur einer Federschiene, Fig. 4 eine schematische Ansicht in Blickrichtung IV in Fig. 1 mit nur einer Endkappe und die Figuren 5 ist 9 jeweils eine Aufnahme im Schnitt zu unterschiedlichen Ausführungsbeispielen.

### Beschreibung der Ausführungsbeispiele

Ein in Figur 1 gezeigtes Wischblatt 10 weist ein bandartig langgestrecktes, federelastisches Tragelement 12 auf (Figuren 1 und 2), an dessen unteren, der Scheibe zugewandten Bandseite 13 eine langgestreckte, gummielastische Wischleiste 14 längsachsenparallel befestigt ist. An der oberen, von der Scheibe abgewandten Bandseite 11 des auch als Federschiene zu bezeichnenden Tragelements 12 ist in dessen Mittelabschnitt das wischblattseitige Teil 15 einer Anschlussvorrichtung angeordnet, mit deren Hilfe das Wischblatt 10 gelenkig mit einem in Figur 1 strichpunktiert angedeuteten Wischerarm 16 lösbar verbunden werden kann. Der in Richtung eines Doppelpfeils 18 in Figur 1 pendelnd angetriebenen Wischerarm 16 ist in Richtung eines Pfeils 24 zur zu wischenden Scheibe - beispielsweise zur Windschutzscheibe eines Kraftfahrzeugs belastet - deren Oberfläche in Figur 1 durch eine strichpunktierte Linie 22 angedeutet ist. Da die Linie 22 die stärkste Krümmung der Scheibenoberfläche darstellen soll ist klar ersichtlich, dass die Krümmung des mit seinen beiden Enden an der Scheibe anliegenden, noch unbelasteten Wischblatts stärker ist als die maximale Scheibenkrümmung (Figur 1). Unter dem Anpressdruck (Pfeil 24) legt sich das Wischblatt 10 mit seiner Wischlippe 26 über seine gesamte Länge an der Scheibenoberfläche 22 an. Dabei baut sich im aus Metall gefertigten, federelastischen Tragelement 12 eine Spannung auf, welche für eine ordnungsgemäße Anlage der Wischleiste 14 beziehungsweise der Wischlippe 26 über deren gesamte Länge an der Scheibenoberfläche 22 sowie für eine gleichmäßige Verteilung des Anpressdrucks (Pfeil 24) sorgt.

Im Folgenden soll nun auf die besondere Ausgestaltung des erfindungsgemäßen Wischblatts näher eingegangen werden.

In Fig. 2 ist erkennbar, dass das Tragelement 12 aus zwei, voneinander getrennten Federschienen 28 und 30 aufgebaut ist, die zueinander beabstandet sind und einen Spalt 32 begründen. Die Anschlussvorrichtung 15 weist in einem unteren Bereich zwei u-förmige Aufnahmen 34 und 36 auf, in denen die Federschienen 28 und 30 aufgenommen sind. Die Aufnahmen 34 und 36 umfassen die Federschienen 28 und 30 jeweils über einen größeren Teil ihres Querschnitt, wobei der mit dem Wischerarm 16 korrespondierende Teil der Anschlussvorrichtung 15 auf der konvexen Seite 29 des Tragelements 12 angeordnet ist, während die konkave Seite 31 dieser gegenüberliegt.

In Fig. 3 ist die Anschlussvorrichtung 15 schematisch dargestellt, wobei in der Aufnahme 34 die entsprechende Federschiene 28 eingezeichnet ist, während die Federschiene 30, nicht in der entsprechenden Aufnahme 36 liegt. Es ist erkennbar, dass die Aufnahmen 34 und 36 die Federschienen 28 und 30 passend umgreifen. Im Bereich oberhalb der Federschienen 28 und 30 sowie oberhalb des Spalts 32 weist die Anschlussvorrichtung 15 eine Aussparung 40 auf, in die, wenn das Wischblatt 10 zusammengebaut ist, ein Kopfteil einer Wischleiste zu liegen kommt.

Das in Fig. 4 von unten dargestellte Wischblatt 10, das ohne die Wischleiste 14 bzw. Wischerlippe 26 gezeichnet ist, zeigt die Federschienen 28 und 30, den Spalt 32 sowie die Aufnahmen 34 und 36 der Anschlussvorrichtung 15. Es ist erkennbar, dass bei dieser Ausführungsform des Wischblatts 10 die Federschienen 28 und 30 vollständig voneinander getrennt sind und lediglich durch die Anschlussvorrichtung 15 bzw. über Endkappen 38, von denen in Fig. 4 nur eine an einem Ende gezeichnet ist, zusammengehalten werden.

In Fig. 5 ist ein Schnittbild der Aufnahme 34 dargestellt, in der eine Federschiene 28 des Tragelements 12 liegt. Zwischen der Aufnahme 34 und der Federschiene 28 des Tragelements 12 befindet sich ein kleiner Spalt 42, der sich in diesem Ausführungsbeispiel an der konvexe Oberseite 29 und an der seitlichen Längsseite 46 erstreckt. Die konkave untere Seite 31 liegt direkt in der Aufnahme 34 auf. An einer der Wischleiste 14 (in Fig. 5 nicht dargestellt) zugewandten Seite ist der Spalt 42 durch einen Kragen 52 begrenzt. Ein solcher Kragen 52 kann sich auch im Bereich der unteren Seite befinden, für den Fall dass sich der Spalt 42 auch dort erstreckt.

In einem oberen Bereich der Aufnahme 34 befindet sich eine Öffnung 48, durch die eine Masse 44 einbringbar ist. Dazu befindet sich oberhalb der Masse 44 in der Öffnung 48 ein Stempel 50, der in der angedeuteten Pfeilrichtung nach unten bewegbar ist.

In den Figuren 6, 7 und 8 ist angedeutet, wie die Masse 44 mit Hilfe des Stempels 50 im Spalt 42 verteilt wird. Die Masse wird hierzu, wie in Fig. 5 angedeutet, zuerst in die Öffnung eingebracht, beispielsweise als Pulver eingerieselt oder eingeblasen oder in gepresster Tablettenform direkt mit dem Stempel 50 eingeschoben. Es ist auch denkbar, die Masse in flüssiger oder gelförmiger Konsistenz einzuleiten.

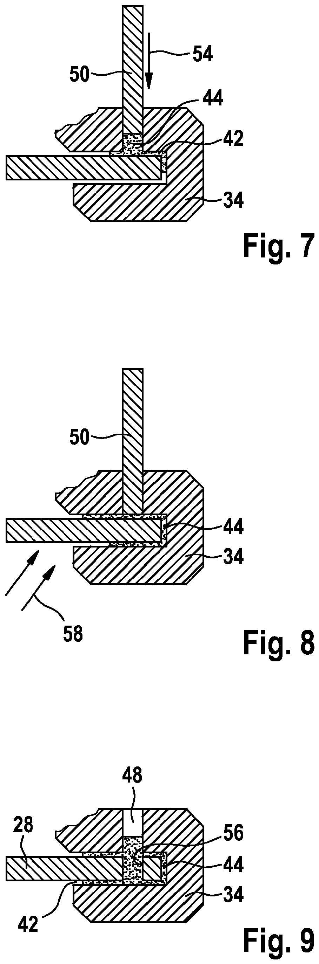

Der Stempel 50 wird dann in Pfeilrichtung 54 bewegt, so dass, wie in Figuren 6 und 7 zu erkennen, die Masse 44 sich entlang des Spaltes 42 ausbreitet und den Spalt 42 ausfüllt. Falls in den Figuren 6 bis 8 dargestellt, kein Kragen 52 vorgesehen ist, ist die Menge der Masse 44 so vorzusehen, dass ein Überlaufen vermieden ist. Ist die Masse 44 vollständig eingepresst (Fig. 8), wird der Stempel 50 dann herausgezogen, wenn das Verfestigen der Masse 44 zumindest begonnen hat. Je nach Material der Masse 44 kann das Verfestigen beschleunigt werden, indem Wärme 58 oder ultraviolettes Licht in den Bereich des Spaltes zugeführt wird.

Ein weiteres Ausführungsbeispiel ist in Fig. 9 dargestellt, bei dem das Einbringen der Masse 44 bereits vollendet und der Stempel 50 entfernt ist. Bei dieser Variante weist die Federschiene 28 eine Ausnehmung 56 auf, die vollständig von der Masse 44 durchdrungen ist. Ferner verbleibt ein Teil der Masse 44 in der Öffnung 48. Auf diese Weise ergibt sich nach dem Verfestigen der Masse 44 ein formschlüssiger Verbund zwischen der Federschiene 28 und der Aufnahme 34. Um den Verbund weiter zu verstärken, kann die Öffnung 48 auch in einen unteren Bereich der Aufnahme 34 zumindest teilweise fortgesetzt sein. Die Ausnehmung 56 kann auch am Rand der Federschiene 28, 30 eingebracht sein. Ferner ist es möglich mehrere Ausnehmungen 56 vorzusehen.

Ein erfindungsgemäßes Wischblatt 10 wird nun folgendermaßen hergestellt:

Die Federschienen 28, 30 des Tragelements 12 werden in die Aufnahmen 34, 36 der Anschlussvorrichtung 20 eingeführt, so dass sich ein Spalt 44 zwischen den Aufnahmen 34, 36 und den Federschienen 28, 30 einstellt. Die Federschienen 28, 30 werden relativ zur Anschlussvorrichtung 20 fixiert. In die Öffnungen 48 wird die Masse 44 eingebracht und mittels Stempel 50 in die Spalte 44 eingepresst. Nach dem Verfestigen der Masse 44 werden die Stempel 50 herausgezogen und die Wischleiste 14 eingefädelt. Nach dem sich anschließenden Aufbringen der Endkappen 38 kann auch eine Abdeckkappe über die Anschlussvorrichtung 20 gestülpt werden, sofern dies vorgesehen ist.

Als Masse 44 können beispielsweise schmelzbare Polymere vorgesehen werden, die in erwärmter Form in die Öffnungen 48 eingebracht werden und in den Spalten 42 abkühlen und erhärten. Es ist jedoch auch möglich, als Masse 44 Duroplaste vorzusehen, die in den Spalten 42 ausvulkanisieren und erhärten. Zur Reaktionsbeschleunigung kann vorgesehen sein, diesen Bereich zu erwärmen oder mit ultraviolettem Licht zu bestrahlen.

Es ist auch möglich, die Masse 44 als Teil des wischblattseitigen Teils 15 vorzusehen, das dann in einem ersten Schritt durch die Sonotroden aufgeschmolzen und in den Spalt eingepresst wird. Dadurch entfällt ein separates Handling mit Pulver, Gel oder Flüssigkeit. Die Masse 44 wäre dann analog zu Figur 6 als eine Art Boden in der Öffnung 48 vorgesehen.

## Patentansprüche

1. Wischblatt zum Wischen von Scheiben, insbesondere von Kraftfahrzeugscheiben, mit einem Tragelement (12) zum Aufnehmen einer Wischleiste (14), an dem eine Anschlussvorrichtung (20) befestigt ist, die ein wischblattseitiges Teil (15) mit krallenartigen Aufnahmen (32, 34) aufweist, die das Tragelement (12) zumindest bereichsweise umgreifen, wobei zwischen dem Tragelement (12) und zumindest einer Aufnahme (32, 34) ein Spalt (42) vorgesehen ist, der mit einer Masse (44) ausgefüllt ist, wobei die Masse (44) ein 2-Komponentenklebstoff und/oder Harz ist, **dadurch gekennzeichnet, dass** die zumindest eine Aufnahme (32, 34) zumindest eine Öffnung (48) zum Einbringen der Masse (44) aufweist, und wobei die Masse (44) die zum Einbringen vorgesehene Öffnung (48) zumindest teilweise verschließt.

2. Wischblatt nach Anspruch 1, **dadurch gekennzeichnet, dass** der Spalt (42) zumindest in Richtung auf die Wischleiste (14) zu begrenzt ist.

3. Wischblatt nach einem der vorhergehenden Ansprüche, **dadurch gekennzeichnet, dass** sich der Spalt (42) nur über zwei Seiten des Tragelements (12) erstreckt.

4. Wischblatt nach einem der vorhergehenden Ansprüche, **dadurch gekennzeichnet, dass** die Masse (44) vor dem Einbringen in den Spalt (42) fließfähig ist und sich im Spalt (42) verfestigt.

5. Wischblatt nach einem der vorhergehenden Ansprüche, **dadurch gekennzeichnet, dass** die Masse (44) eine Flüssigkeit oder ein Gel ist.

6. Wischblatt nach einem der Ansprüche 1 bis 4, **dadurch gekennzeichnet, dass** die Masse (44) ein Pulver oder ein Granulat ist.

7. Wischblatt nach einem der vorhergehenden Ansprüche, **dadurch gekennzeichnet, dass** das Tragelement eine Ausnehmung (56) aufweist, durch die sich die Masse (44) erstreckt.

8. Verfahren zum Herstellen eines Wischblatts, mit einem Tragelement (12) zum Aufnehmen einer Wischleiste (14), an dem eine Anschlussvorrichtung (20) befestigt ist, die ein wischblattseitiges Teil (15) mit krallenartigen Aufnahmen (32, 34) aufweist, die das Tragelement (12) zumindest bereichsweise umgreifen und zwischen dem Tragelement (12) und zumindest einer Aufnahme (32, 34) ein Spalt (42) vorgesehen ist, insbesondere nach einem der vorhergehenden Ansprüche, **dadurch gekennzeichnet, dass** nach dem Positionieren des Tragelements (12) in den Aufnahmen (32, 34) der Anschlussvorrichtung (20) eine Masse (44) in den Spalt (42) eingebracht wird, die sich im Spalt (42) verfestigt.

9. Verfahren nach Anspruch 8, **dadurch gekennzeichnet, dass** die Masse (44) durch eine Öffnung (48) eingebracht wird und sich entlang des Spalts (42) verteilt.

10. Verfahren nach einem der vorhergehenden Ansprüche, **dadurch gekennzeichnet, dass** die Masse (44) mithilfe eines Kolbens oder Stempels (50) eingepresst wird.

11. Verfahren nach einem der vorhergehenden Ansprüche, **dadurch gekennzeichnet, dass** die Masse (44) vor dem Einbringen erwärmt wird und sich nach dem Einbringen abkühlt.

12. Verfahren nach einem der Ansprüche 8 bis 10, **dadurch gekennzeichnet, dass** sich die Masse (44) im Spalt (42) erwärmt und dadurch verfestigt.

## Claims

1. Wiper blade for wiping panes, in particular vehicle panes, having a carrier element (12) for receiving a wiper strip (14), to which there is secured a connection device (20) which has a wiper-blade-side portion (15) having claw-like receiving members (32, 34), which at least partially engage round the carrier element (12), there being provided between the carrier element (12) and at least one receiving member (32, 34) a gap (42) which is filled with a mass (44), the mass (44) being a 2-component adhesive material and/or a resin, **characterized in that** the at least one receiving member (32, 34) has at least one opening (48) for introducing the mass (44), and the mass (44) at least partially closing the opening (48) which is provided for the introduction.

2. Wiper blade according to Claim 1, **characterized in that** the gap (42) is delimited at least in the direction towards the wiper strip (14).

3. Wiper blade according to either of the preceding claims, **characterized in that** the gap (42) extends only over two sides of the carrier element (12).

4. Wiper blade according to one of the preceding claims, **characterized in that** the mass (44) is flowable before being introduced into the gap (42) and solidifies in the gap (42).

5. Wiper blade according to one of the preceding claims, **characterized in that** the mass (44) is a liquid or a gel.

6. Wiper blade according to one of Claims 1 to 4, **characterized in that** the mass (44) is a powder or a granulate.

7. Wiper blade according to one of the preceding claims, **characterized in that** the carrier element has a recess (56) through which the mass (44) extends.

8. Method for producing a wiper blade, having a carrier element (12) for receiving a wiper strip (14), to which carrier element there is secured a connection device (20) which has a wiper-blade-side portion (15) having claw-like receiving members (32, 34), which at least partially engage round the carrier element (12) and a gap (42) is provided between the carrier element (12) and at least one receiving member (32, 34), in particular in accordance with one of the preceding claims, **characterized in that**, after the carrier element (12) has been positioned in the receiving members (32, 34) of the connection device (20), there is introduced into the gap (42) a mass (44) which solidifies in the gap (42).

9. Method according to Claim 8, **characterized in that** the mass (44) is introduced through an opening (48) and is distributed along the gap (42).

10. Method according to either of the preceding claims, **characterized in that** the mass (44) is pressed in by means of a piston or a stamp (50).

11. Method according to one of the preceding claims, **characterized in that** the mass (44) is heated before being introduced and cools after being introduced.

12. Method according to one of Claims 8 to 10, **characterized in that** the mass (44) is heated in the gap (42) and thereby solidifies.

## Revendications

1. Balai d'essuie-glace pour l'essuyage de vitres, en particulier de vitres de véhicule à moteur, avec un élément de support (12) destiné à recevoir une lame d'essuie-glace (14) et sur lequel est fixé un dispositif de raccordement (20) qui présente une partie côté essuie-glace (15) avec des logements en forme de griffes (32, 34), qui entourent au moins localement l'élément de support (12), dans lequel il est prévu entre l'élément de support (12) et au moins un logement (32, 34) une fente (42), qui est remplie avec une masse (44), dans lequel la masse (44) est une colle à deux composants et/ou une résine, **caractérisé en ce que** ledit au moins un logement (32, 34) présente au moins une ouverture (48) pour l'introduction de la masse (44), et dans lequel la masse (44) obture au moins partiellement l'ouverture (48) prévue pour son introduction.

2. Balai d'essuie-glace selon la revendication 1, **caractérisé en ce que** la fente (42) est limitée au moins en direction de la lame d'essuie-glace (14).

3. Balai d'essuie-glace selon l'une quelconque des revendications précédentes, **caractérisé en ce que** la fente (42) ne s'étend que sur deux côtés de l'élément de support (12).

4. Balai d'essuie-glace selon l'une quelconque des revendications précédentes, **caractérisé en ce que** la masse (44) est coulante avant son introduction dans la fente (42) et se solidifie dans la fente (42).

5. Balai d'essuie-glace selon l'une quelconque des revendications précédentes, **caractérisé en ce que** la masse (44) est un liquide ou un gel.

6. Balai d'essuie-glace selon l'une quelconque des revendications 1 à 4, **caractérisé en ce que** la masse (44) est une poudre ou un granulat.

7. Balai d'essuie-glace selon l'une quelconque des revendications précédentes, **caractérisé en ce que** l'élément de support présente un évidement (56), à travers lequel la masse (44) s'étend.

8. Procédé de production d'un balai d'essuie-glace, avec un élément de support (12) destiné à recevoir une lame d'essuie-glace (14) et sur lequel est fixé un dispositif de raccordement (20) qui présente une partie côté essuie-glace (15) avec des logements en forme de griffes (32, 34), qui entourent au moins localement l'élément de support (12), et il est prévu entre l'élément de support (12) et au moins un logement (32, 34) une fente (42), en particulier selon l'une quelconque des revendications précédentes, **caractérisé en ce qu'**après le positionnement de l'élément de support (12) dans les logements (32, 34) du dispositif de raccordement (20), on introduit dans la fente (42) une masse (44), qui se solidifie dans la fente (42).

9. Procédé selon la revendication 8, **caractérisé en ce que** l'on introduit la masse (44) à travers une ouverture (48) et elle se répartit le long de la fente (42).

10. Procédé selon l'une quelconque des revendications précédentes, **caractérisé en ce que** l'on bourre la masse (44) à l'aide d'un piston ou d'un poinçon (50).

11. Procédé selon l'une quelconque des revendications précédentes, **caractérisé en ce que** l'on chauffe la masse (44) avant son introduction et elle se refroidit après son introduction.

12. Procédé selon l'une quelconque des revendications 8 à 10, **caractérisé en ce que** la masse (44) s'échauffe dans la fente (42) et de ce fait elle se solidifie.
